# EUROPEAN PATENT APPLICATION

(11) **EP 1 260 915 A1**
(43) Date of publication of application: **27.11.2002**
(21) Application number: 01650056.3
(22) Date of filing: 22.05.2001
(51) Int. Cl.: G06F 17/30

(54) **A method and system for viewing a folder structure of removable storage media**

(71) Applicant: Gateway, Inc., Poway, California 92064 (US)
(72) Inventor: Martin, Jeremy Nicolas, Santry, Dublin 9 (IE)
(74) Representative: McCarthy, Denis Alexis

(57) **Abstract**

A method for viewing a folder structure of a storage medium, comprising reading the folder structure of the storage medium, converting the folder structure to at least one hypertext markup language (HTML) file and storing the at least one hypertext mark-up language (HTML) file on a server; the at least one hypertext mark-up language (HTML) file being accessible via a network to a user equipped with a browser for accessing the server, so that the user can subsequently view the folder structure of the storage medium without the storage medium being present in the server. A system for viewing a folder structure of a removable storage medium is also disclosed.

## Description

The present invention relates to a method and system for allowing a user to view and browse a folder structure of removable storage media such as CD-ROM, DVD, Floppy discs, Memory sticks, Zip discs and HDD (hard disk drive) and check its contents without having the storage medium resident within a computer system.

The method and system of the invention are especially useful in an environment such as technical support, where technicians don't have the opportunity to physically possess all storage media e.g. optical storage media such as CD-ROMS, that the technical support technicians need to work with. Indeed, technical support technicians usually need to know the location of a certain file (e.g. setup.exe...) present on a CD-ROM. They might also need to read instructions concerning these files (e.g. readme.txt...). The method and system of the present invention provides the technical advantage that this can now be achieved without having the storage medium in the system.

The specification will hereinafter refer to optical storage media as an example of removable storage medium, the folder structure of which can be viewed using the method and system of the invention. The specification will also refer to CD-ROM as an example of such optical removable storage medium.

Applications to create a folder tree on a web page are available currently on the Internet. However, these are usually fully developed in Javascript, or even Java Applet form. These aforementioned scripts are sufficient to use in providing a "map" of a site and for this purpose, these kind of scripts are adequate, but when creating the whole structure of an optical storage medium such as a CD-ROM, the amount of lines involved in coding these scripts is so vast that web pages enhanced by such scripts usually take too long to download or even cause the browser to crash. Indeed, because they are client side scripts the one file that is downloaded needs to contain the full description of a CD-ROM. This can represent thousands and thousands of script lines for some CD-ROMS. Opening such a file results in a very long wait, and browsing through the structure is even slower because the client side script needs to refresh the page by generating a new view, each time a user clicks to open or close a folder. Moreover, these scripts don't come with the utility that allows a user to generate the entire script automatically; a user still needs to type a line of code for each folder or file. This would involve typing thousands and thousands of lines of code.

The present invention seeks to alleviate the disadvantages of the prior art.

The present invention accordingly provides a method for viewing a folder structure of a storage medium, comprising
reading the folder structure of the storage medium;
converting the folder structure to at least one hypertext mark-up language (HTML) file; and storing the at least one hypertext mark-up language (HTML) file on a server; the at least one hypertext mark-up language (HTML) file being accessible, via a network, to a user equipped with a browser for accessing the server, so that the user can subsequently view the folder structure of the storage medium without the storage medium being present in the server.

The method and system of the invention reside on a Web server and contains data information for each system CD-ROM or application CD-ROM and stores the folder structure as well as files taken from the CD-ROM, as HTML files on the server hard disk; therefore, users accessing the server through their browser, can select the CD-ROM they want to browse, and through a Web interface very similar to Windows Explorer, they can navigate through the folder structure of the CD-ROM, and even read some of the files from it. Thus, the graphic user interface (GUI) for viewing the data is very similar to viewing of a directory of an attached storage device. The steps of reading the folder structure of the CD-ROM and converting it to a set of HTML files is carried out by an application such as Borland's Delphi, referred to herein as "CD Builder".
(1) There are two aspects to the invention:
   (a) The user interface which uses static HTML pages stored on the server hard disk. These HTML files are coded with a specific sequence of HTML tags in order to give the list of folders and files, a similar layout as Windows Explorer. Further description of these HTML tags is provided in Example 1. A web server application generates the user interface by accepting HTTP requests from the user, retrieving HTML pages from the server and sending them to the user's browser.
   (b) an application such as Borland's Delphi, referred to herein as "CD Builder", for browsing the folder structure of optical storage media such as CD-ROMS, and generating HTML pages.

Preferably, information relating to a specific optical storage medium is converted to a set of HTML files, each HTML file describing only a portion of the whole directory structure, thereby optimising the transfer and display of large amounts of information over a narrowband network.

Preferably, the HTML files are coded with a specific sequence of HTML tags in order to give the list of folders and files a similar layout as Windows Explorer. This has the advantage that because the application uses only HTML tags and some Javascript language, it is compliant with the main types of browser e.g. Netscape, Internet Explorer and Opera.

In one particular embodiment, the method comprises a recording phase and a viewing phase, the recording phase comprising the follow steps:
(a) inserting the optical storage medium in the server;
(b) creating a set of HTML files on the hard disk of server for capturing the directory structure of the optical storage medium;
(c) copying a set of files and folders to the user's system or to the user's web server;
(d) updating a list of viewable optical storage media on the user interface.

Preferably, the viewing phase comprises the following steps:
(a) retrieving the static HTML pages stored on the hard disk of the server;
(b) sending the HTML pages to the client viewer;
(c) from the HTML user interface, selecting an optical storage medium from the list of viewable media, and browsing the directory structure.

The present invention also provides a system for viewing a folder structure of an optical storage medium comprising:
a processor for executing a program of instructions on an information handling system;
means for reading the folder structure of an optical storage medium;
means for converting the folder structure to at least one hypertext mark-up language (HTML) file and memory means, copied to said processor for storing at least one HTML file on a server;
means for handling HTTP requests from the client browser for retrieving the HTML files stored on the hard disk and send the HTML files to the browser.

In one particular embodiment, the system for viewing a folder structure of an optical storage medium includes:
means for providing a user interface reading static HTML pages stored on the server hard disk; and
an application, such as Borland's Delphi, browsing the folder structure of CD-ROMs and then generating the HTML pages.

The main advantages of the method and system of the present invention are as follows:
1. The invention is accessible to all users having a computer equipped with a browser e.g. Internet Explorer and having access to the Internet or Intranet.
2. Folders as well as files are listed: the application also detects hidden folders and displays files with their extensions;
3. Due to the fact that the method and system of the invention uses HTML tags, with some Javascript language, it is compliant with the main types of browser such as Netscape, Internet Explorer, and Opera;
4. Information related to any one CD-ROM is in fact contained in a set of hypertext mark up language (HTML) files. Each individual HTML file describes a portion of the whole directory structure. As a result of this, a user is able to view and browse a folder structure very quickly.

The method and system of the invention will now be described more particularly with reference to the accompanying drawings which show by way of example only, one embodiment of the invention.

In the drawings:
Figure 1 is a flow chart showing the steps taken in the recording phase, by a user, to run the CD builder application on a new storage medium so that the user records the data (directory structure and names) of the new storage medium (e.g. CD-ROM);
Figure 1a is a block diagram showing the inter-relationship between the web server e.g. Internet Information Server (IIS) and the client browser e.g. Internet explorer to retrieve the information during the viewing phase;
Figure 2 is a flow chart which shows the internal steps that the CD Builder application itself, carries out in reading (scanning) the new optical storage medium and creating the set of folders and files that captures the directory structure on the server hard disk. The steps of reading the optical storage medium and creating the set of folders and files is carried out by the CD builder application and is commenced when the user selects the "Run CD Builder" option on the user interface;
Figure 3 shows the user interface visible to a user when the user runs the method of the invention on his computer, in order to view a folder structure of a CD-ROM, the content of which has already been recorded, so that the CD-ROM does not have to present in the computer.
Figure 4 also shows the user interface;
Figure 5 shows the interface when the "CD Builder" application is to be operated.

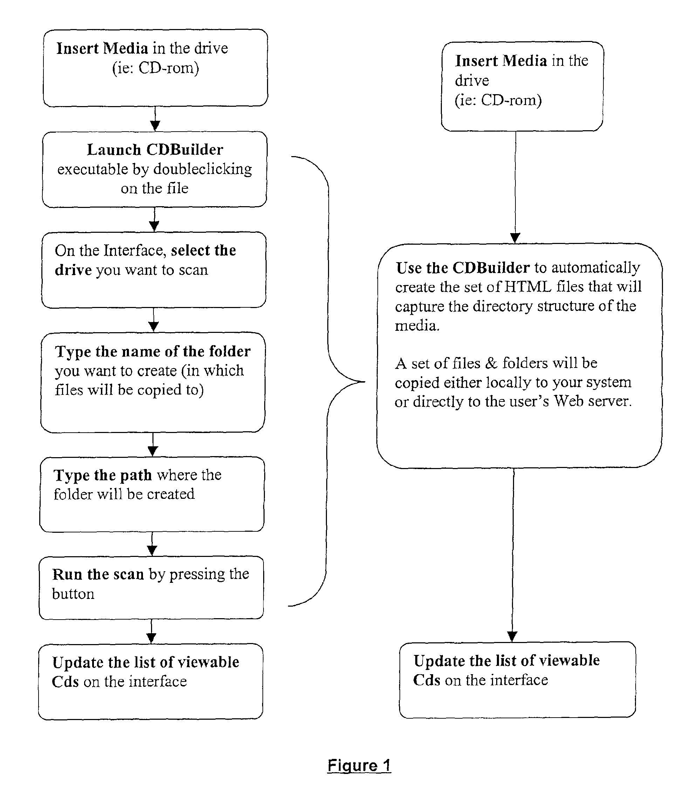

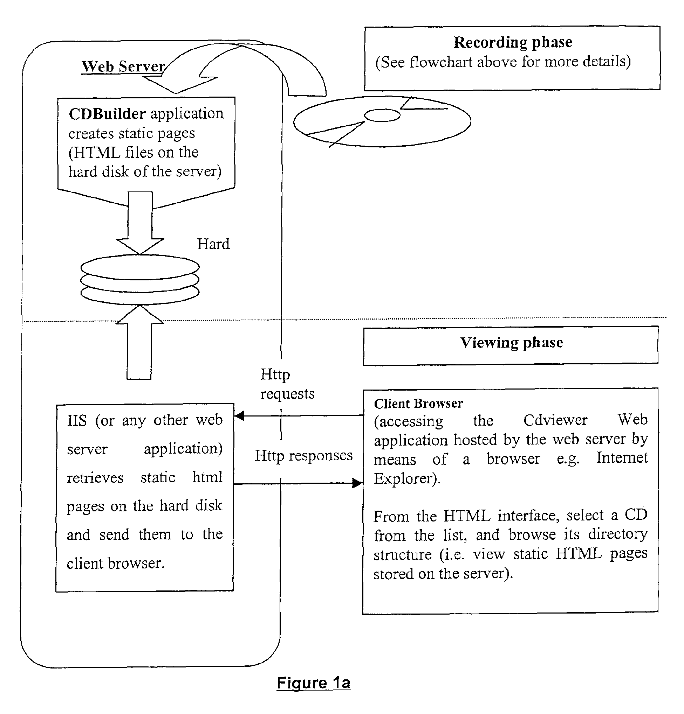

As shown in the flowcharts, Figures 1 and 1a, the method and system of the present invention includes two phases, namely (1) the recording phase in which the folder structure of the optical storage medium is read and converted to a set of HTML files using "CD builder" application and these HTML files stored on a server hard disk, and (2) the viewing phase in which the HTML files are accessed and viewed by a user.

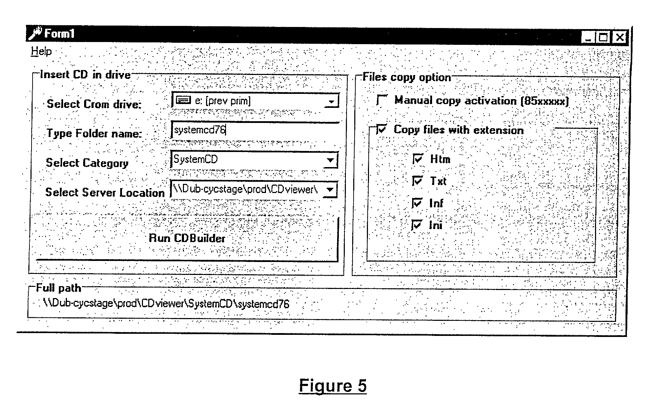

Referring initially to Figure 1, the steps taken in the recording phase, by a user, to run the CD builder application on a new storage medium will be described. By running Cdbuilder, the user records the data (directory structure and names) of the new storage medium. The following description will also refer to Figure 5 which shows the user interface viewable by a user when operating the Cdbuilder application.

To run this program a user needs a computer with a CD-ROM drive or drive for other removable media.

Insert the removable storage media into the drive on the computer which will be used for this task (e.g. insert the CD-ROM into the drive) as shown in Figure 1 Step 1.

Run the Cdbuilder program as you would run any executable (.EXE) file in windows, e.g.. by double clicking on its icon as referred to in Figure 1 Step 2.

On the user interface, the CD-ROM drive is selected to indicate which drive the program will have to scan (Figure 1, Step 3).

In the input "Type Folder name", the string typed will be used to name the root folder to which all the HTML pages will be copied as shown in Figure 1, Step 4. It is better to give an explicit name identifying at best, the CD-ROM you have inserted, e.g. systemCD76.

From the drop list "Select category", you can select the type of CD-ROM, e.g. systemCD. This category facilitates the classification of the root folder inside the CDviewer folder and it will be used to create the drop list of the main interface.

Then a user provides the destination to which the files will be copied. The user can decide to create the folder structure and its files in a temporary folder on his desktop and then copy the entire folder and files on to the server, or the user can also select a remote computer to which folder and files will be copied directly (Figure 1, Step 5).

Additionally, the user can specify which "viewable" files he is interested in copying (see right hand side of the user interface). Any number of files from the CD-ROM can be copied until finally the user has a full copy of the CD on the server, provided there is sufficient memory capacity on the server.

Click on "Run CD Builder" corresponding to figure 1, Step 6.

The "Cdbuilder" application will then create the mirrored structure of the CD-ROM, creating for each folder, the HTML "map", and copying files when necessary.

There is now a new CD structure in the database and it is necessary to add it to the list of CDs that are viewable using the method of this invention as shown in Figure 1, Step 7.

Referring now to Figure 1 a, the block on the left-hand side represents the web server, the computer which will store all the data about the various CD-ROMs. The top half of the flow chart deals with using CDbuilder to read a CD and generate HTML files which are an analogue of the folder and file structure on the CD. These HTML files are stored on the server hard disk. Below the line is the viewing process. The client (e.g. technical support user) connects via a network to the web server and accesses the method of this invention using a web browser. The sends HTTP requests from the user to the server (which must be running an 'Internet Information Server' application (or equivalent)). This IIS application will retrieve the HTML pages from the hard disk and send them to the client's browser.

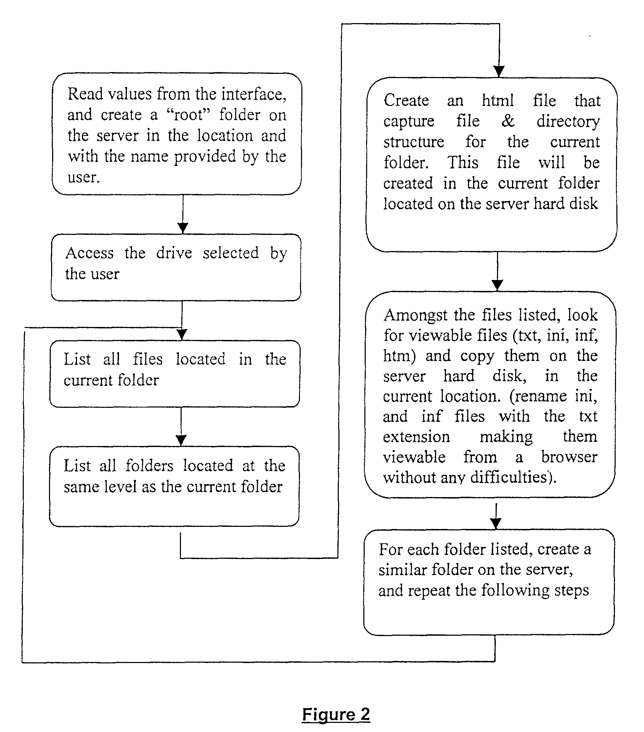

Referring now to Figure 2, the internal steps that CDBuilder uses to recursively generate all the HTML files for each folder on the CD will now be described:
Step 1: Read the values for drive to scan, folder name, and folder path as entered by the user during the stages shown in figure 1 of the drawings:
Step 2: Access the drive selected by the user and read the CD contained in it,
Steps 3 & 4: The first time these steps are carried out, current folder will be the root folder "\". All the files and folders contained in the current folder will be listed,
Step 5: Create an HTML file listing the above files and folders as explained in 'Example 2' on page 6 of the spec. This file will be created in the folder specified in step 1,
Step 6: In addition to copying the names of files, any files which have extensions indicating that they are viewable will be copied themselves to the folder as in step 5 along with the HTML file mentioned in step 5.
Step 7: For each folder listed (and named in the HTML file in step 6) create a folder on the server hard disk. Then, recursively jump to step 3 and this time the 'current folder' is one of those listed in step 4.

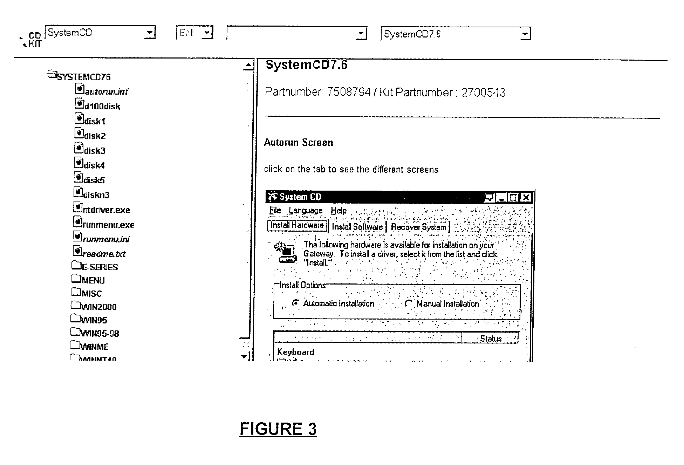

Referring now to Figure 3, the user interface in the viewing phase, will be described. When the method of the invention is operated, a user will see that along the top frame the user interface provides several drop lists which allow the user to choose the CD-ROM he/she wants to see.

The lower part of the user interface is then split into two frames: on the left hand side, the folder structure is displayed and on the right hand side, the default page is used to display specifications about the CD-ROM (part number...autorun screen shots, picture of the CD-ROM package and so on).

Each static HTML file displayed on the user's browser as above provides a portion of the directory structure. Child folders and files are represented by indenting them relative to the parent folder as shown in Figure 3. For example, to achieve this, <dl>, <dt>, <dd> HTML tags are used.

Inside each tag, a picture is inserted (a folder 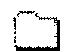 or a file picture 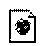 ) depending on which type of object this line describes. Each folder is a link to another HTML page, so that you can view the inner structure of the folder by clicking on it. An example of HTML code is shown below in Example 1.

### EXAMPLE 1:

The following is an example of a HTML page producing a folder structure for a CD-ROM:

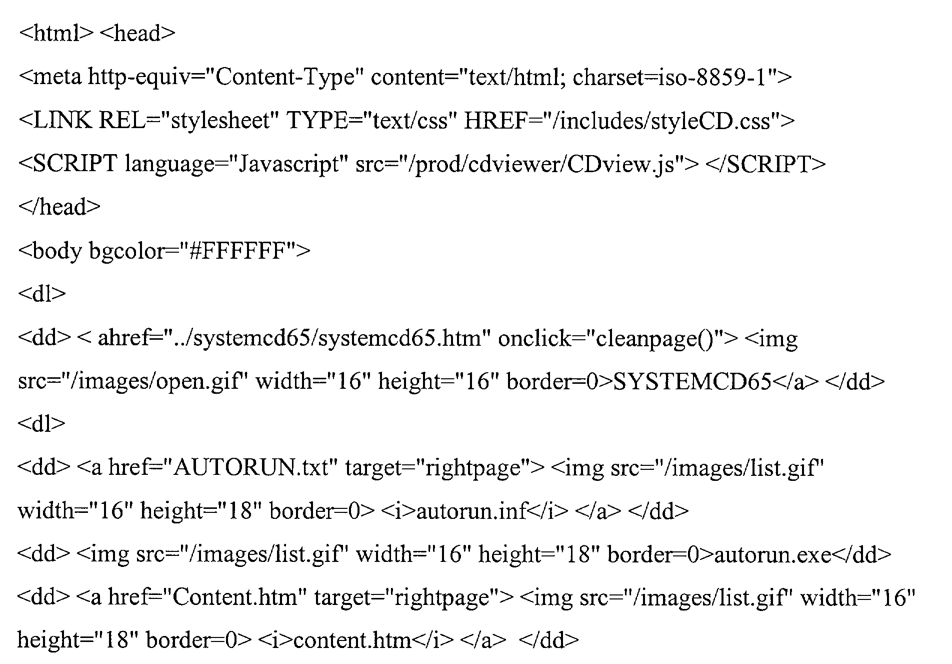

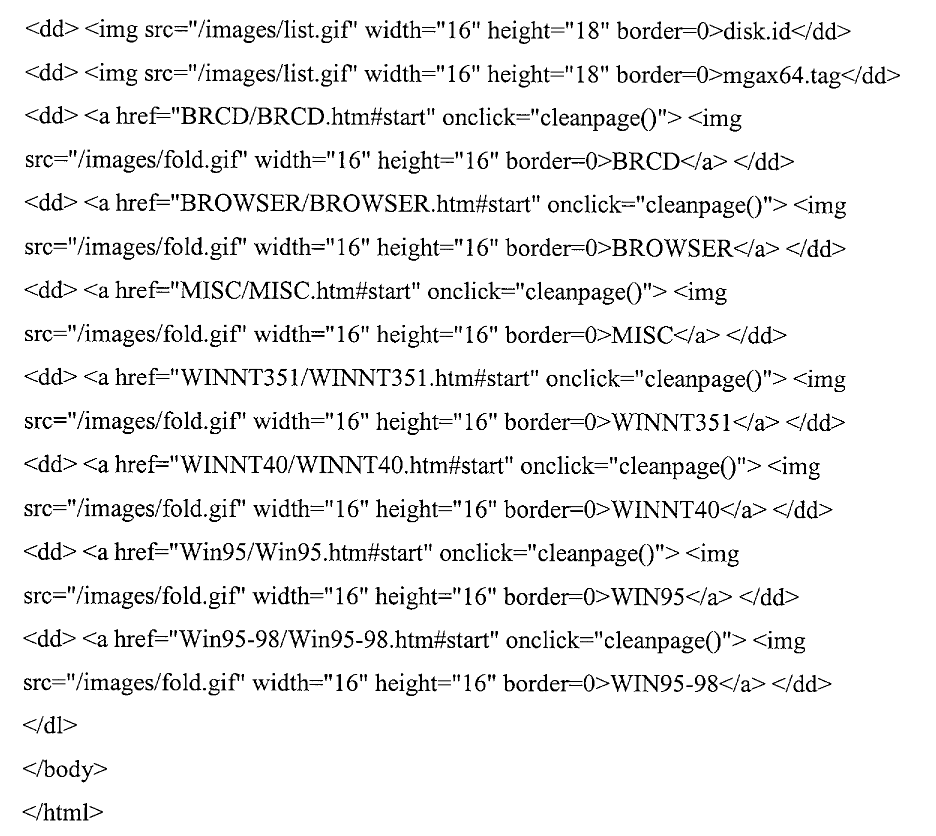

### Viewable files:

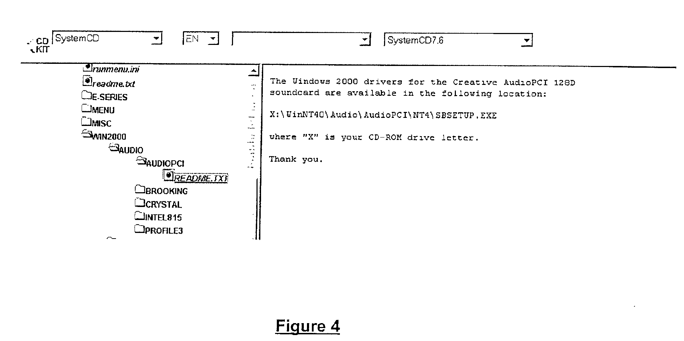

As can be seen from Figure 4 of the drawings, not only is the full list of files and folders provided on each page, but some of the files (mainly .ini, .inf, .txt, .htm) appear in italics, this actually means that the user can click on those files to see their content on the frame on the right hand side. Referring to Figure 4, if a user clicks on readme.txt for instance, the content thereof is displayed on the right hand side frame.

### EXAMPLE 2:

### HTML pages & Folder structure:

In order to describe how the HTML files are stored on the server, the use of the method and system of the invention to record the structure of a CD-ROM entitled 'SOLOCD45' will now be described. For simplicity and demonstration purposes, the content of the CD-ROM of this example will be taken to be two files and two folders.

For each folder on the CD-ROM, a folder will be created on the server, that way, the CD-ROM folder structure is being mirrored on the server hard disk. In each of these folders on the server, a HTML file (named after the folder) will be created. This HTML file lists the files and folders of the current folder as well as its parent folders.

The following table shows the server folder structure on the left hand side, and shows what the HTML page looks like in each folder on the right hand side. The steps involved in creating this structure in the HTML files are set out in Figure 2.

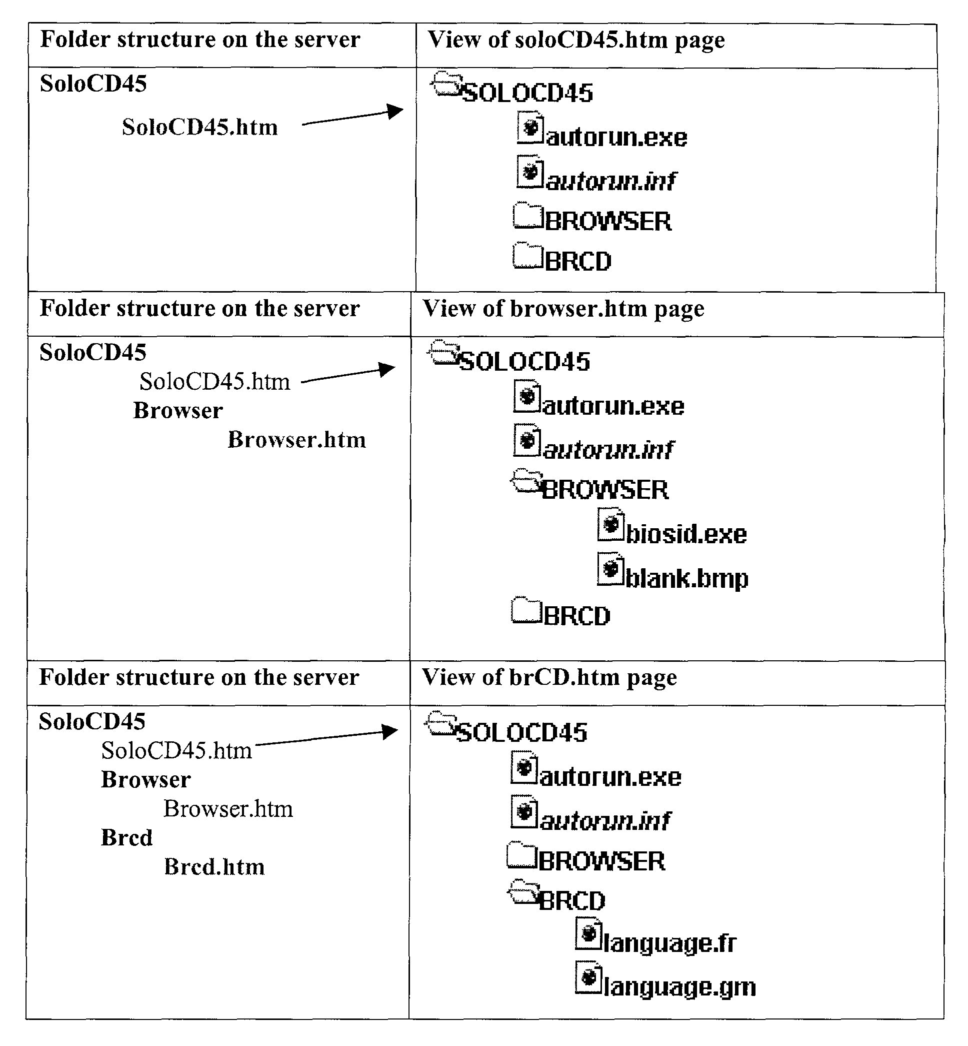

Viewable files (i.e. Autorun.inf) are copied onto the server and because the whole folder structure has been mirrored, the file will be put in its parent folder.

In this example, the autorun.inf file is copied in soloCD45 (the root folder) and renamed with the extension txt.

The final structure of files for the CD-ROM of this Example (SOLO CD 45) is as follows:

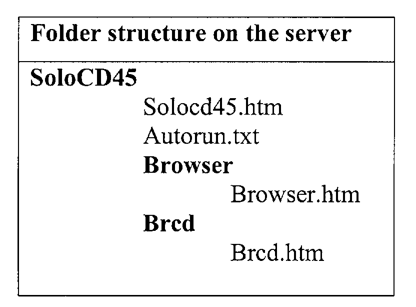

Generally, for an entire CD, this involves having hundreds or even thousands of folders created on the server as well as HTML pages generated or even copied from the CD onto the server.

To manually create such a vast number of folders and HTML pages would take far too much time, therefore, the method and system of the invention also includes the Delphi program referred to herein as "CDBuilder" which carries the tedious work of creating the folders and generates the HTML pages on the server.

Thus the "Cdbuilder" is be used whenever a new CD-ROM needs to be scanned and is initially inserted in the CD-ROM drive of the server.

The method and system of the present invention have the advantage that the interface of the Web application provides a very easy way to access the data: on the right hand side of the user interface, the folder structure is displayed; whenever the user clicks on a file flagged as a viewable file (a hyperlink), the content of this file is displayed on the left part of the screen. On the top of the screen, a listing of all CD-ROMS is provided and this gives an easy way to browse through the list of CD-ROMs available.

Furthermore, in a technical support environment, everything can be centralised on a main server, updates or corrections are performed once and therefore all users have the latest version simultaneously as the page goes live.

Additional information related to each CD-ROM can be added on the default page including part number, description of the content of the CD in plain text, screen shot, and picture of the package.

The System elements for recording phases of the method of the invention are as follows:
(a) The executable, CDBuilder that will create the set of HTML files associated to each media which the user scans with it. These HTML files will need available free memory space on the hard disk (from few kilobytes, if the created folder only contains HTML pages rendering the directory structure, up to several Megabytes, if the folder also contains some of the "viewable" files copied directly from the media), and
(b) A Web Server application, for example, Internet Information Server (IIS) to handle HTTP requests from the client browser, retrieve HTML pages on the hard disk and send them to the browser.

The system elements for the viewing phase of the method of the invention are as follows:
(a) a web browser (e.g. Internet Explorer, Netscape...) running on the remote computer, and
(b) an Internet access (if the Web server is on the internet), or a network access (for the intranet).

## Claims

1. A method for viewing a folder structure of a storage medium, comprising:
reading the folder structure of the storage medium;
converting the folder structure to at least one hypertext markup language (HTML) file; and
storing the at least one hypertext mark-up language (HTML) file on a server;
the at least one hypertext mark-up language (HTML) file being accessible via a network to a user equipped with a browser for accessing the server, so that the user can subsequently view the folder structure of the storage medium without the storage medium being present in the server.

2. A method as claimed in Claim 1 wherein information relating to a specific storage medium is converted to a set of HTML files, with each HTML file describing a portion of the whole directory structure, thereby optimising the transfer and display of large amounts of information over a narrowband network.

3. A method according to Claim 2 wherein the HTML files are coded with a specific sequence of HTML tags in order to give the graphic user Interface (GUI) substantially the same layout as Windows Explorer.

4. A method as claimed in Claim 1 wherein the method comprises a recording phase and a viewing phase, the recording phase comprising the follow steps:
(a) inserting the optical storage medium in the server;
(b) creating a set of HTML files on the hard disk of server for capturing the directory structure of the optical storage medium;
(c) copying a set of files and folders to the user's system or to the user's web server;
(d) updating a list of viewable optical storage media on the user interface.

5. A method as claimed in Claim 6 wherein the viewing phase comprises the following steps;
(a) retrieving the static HTML pages stored on the hard disk of the server;
(b) sending the HTML pages to the client browser;
(c) from the HTML user interface, selecting an optical storage medium from the list of viewable media, and browsing the directory structure.

6. A system for viewing a folder structure of a removable storage medium comprising:
means for reading the folder structure of a removable storage medium;
means for converting the folder structure to at least one hypertext mark-up language (HTML) file and memory means, coupled to said processor for storing at least one HTML file on a server;
means for handling HTTP requests from the client browser for retrieving the HTML files stored on the hard disk and sending the HTML files to the browser.

7. A system as claimed in Claim 6 including:
(1) a user interface reading static HTML pages stored on the server hard disk; and
(2) an application for browsing the folder structure of CD-ROMs and then generating said HTML pages.

8. A system as claimed in Claim 6 or Claim 7 **characterized in that** a web server application generates the user interface by accepting HTTP requests from the user, retrieving HTML files from the server and sending them to the user's browser.
